(19) Europäisches Patentamt
European Patent Office
Office européen des brevets

(11) Numéro de publication: 0 001 954
B1

(12) **FASCICULE DE BREVET EUROPEEN**

(45) Date de publication du fascicule de brevet: 26.08.81

(51) Int. Cl.³: C 03 C 27/06, B 32 B 17/10, C 09 J 3/16

(21) Numéro de dépôt: 78400157.0

(22) Date de dépôt: 30.10.78

(54) **Procédé pour la fabrication du verre feuilleté et produit obtenu selon ledit procédé.**

(30) Priorité: 03.11.77 FR 7733008

(43) Date de publication de la demande: 16.05.79 Bulletin 79/10

(45) Mention de la délivrance du brevet: 26.08.81 Bulletin 81/34

(84) Etats Contractants Désignés: DE GB SE

(56) Documents cités:
FR - A - 1 552 979
FR - A - 1 580 868
FR - A - 2 120 070
FR - A - 2 144 525
FR - A - 2 281 968
US - A - 2 996 416
US - A - 3 449 184

(73) Titulaire: COMMISSARIAT A L'ENERGIE ATOMIQUE Etablissement de Caractère Scientifique Technique et Industriel
B.P. 510
F-75752 Paris Cedex 15 (FR)

(72) Inventeur: Guerrini, Jacques
Domaine de Bel Abord Avenue Mazarin
F-91380 Chilly Mazarin (FR)
Inventeur: Berthet, Jeanne
4, Allée du Roussillon
F-78140 Velizy Villacoublay (FR)
Inventeur: Gaussens, Gilbert
11, rue Jean Brunet
F-92190 Meudon (FR)
Inventeur: Lemaire, Francis
82, rue Pierre Brossolette
F-92320 Chatillon (FR)

(74) Mandataire: Mongredien, André et al,
c/o Brevatome 25, rue de Ponthieu
F-75008 Paris (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 001 954 B1

Procédé pour la fabrication du verre feuilleté et produit obtenu selon ledit procédé.

La présente invention a pour objet un procédé et des moyens de réalisation d'un produit transparent feuilleté, ainsi qu'un produit transparent feuilleté.

Selon l'invention, par produit transparent feuilleté il faut entendre un produit plan ou non constitué par l'empilement d'au moins deux feuilles d'un matériau apte à laisser passer la lumière, ces feuilles étant bien sûr solidarisées entre elles.

Cette définition recouvre donc plusieurs types de produits. Le plus connu est le verre feuilleté.

Ce verre feuilleté est connu en particulier sous la marque déposée "TRIPLEX". On sait que ce produit est constitué par un sandwich comportant un film plastique disposé entre deux plaques de verre, les deux plaques de verre adhérant au film plastique. Le plus souvent, le film de plastique est constitué par un polyvinyl butyral. Par verre feuilleté, il faut entendre d'une manière plus générale un sandwich transparent constitué par *n* plaques de verre et n-1 films plastiques, dans lequel on trouve en alternance une plaque de verre et un film plastique. Au verre feuilleté proprement dit il faut ajouter un produit voisin dans lequel au moins une des plaques ou feuilles est remplacée par une feuille rigide en polycarbonate.

L'invention concerne également un produit feuilleté qui est constitué directement par la juxtaposition de feuilles de verre et/ou de feuilles de polycarbonate sans interposition de film plastique entre deux feuilles consécutives.

Le verre feuilleté peut se présenter sous forme de plaque plane. C'est le cas pour les verres utilisés en particulier dans les bâtiments. Il peut également se présenter sous une forme non plane, c'est par exemple le cas des parebrise de véhicules automobiles.

Le verre feuilleté doit posséder certaines caractéristiques qui dépendent de son utilisation. Les principales caractéristiques demandées sont les suivantes:

Pour ce qui est de l'adhérence entre les plaques de verre et le film plastique, il faut qu'après martelage les débris de verre ne se décollent pas du film plastique. Cette caractéristique est surtout exigée pour la réalisation de pare-brise pour véhicules automobiles.

Il ne faut pas par ailleurs qu'il y ait de modification dans le temps des qualités optiques du produit. En particulier, il ne faut pas qu'il y ait jaunissement à la lumière.

Il faut enfin que le verre feuilleté présente une bonne tenue aux intempéries. Cela se vérifie par l'application successive de tests accélérés, à savoir deux heures d'immersion dans l'eau bouillante et cent heures d'exposition dans une ambiance à 120°C en chaleur sèche.

On voit que ce produit peut présenter de très nombreuses applications déjà indiquées. On peut y ajouter la réalisation de vitrines constitués par des verres anti-vol ou des verres pare-balles et enfin la décoration intérieure et extérieure de bâtiments.

On comprend de plus que ce verre est utilisé ou est susceptible d'être utilisé en très grandes quantités et qu'il est particulièrement important de disposer d'un procédé de fabrication de verre feuilleté que permette un production en grande série avec des coûts de réalisation aussi bas que possible. Cela signifie que chaque étape du procédé permettant d'obtenir le verre feuilleté doit être réalisée dans des conditions de coût aussi faibles que possible et qu'en particulier il faut éviter les opérations de manipulation.

Le verre feuilleté est selon un procédé connu jusqu'ici réalisé par fusion d'un film plastique (qui est comme on l'a déja indiqué presque exclusivement en polyvinyl butyral), entre les plaques de verre. La fabrication nécessite les opérations suivantes: lavage du film plastique puis essorage de ce film et séchage de celui-ci; assemblage des plaques de verre et du film plastique; élimination des bulles d'air et de gaz qui restent nécessairement entre le film plastique et les plaques de verre. Cela se fait soit sous une pression de 1 à 4 bars à une température de 40 à 90°C, soit sous vide à une température de l'ordre de 110°C; ensuite, on trouve le collage qui correspond à un collage par fusion du film plastique. Il se fait sous une pression de 10 à 14 bars à une température de 120 à 140°C suivie d'un refroidissement lent sous pression jusqu'à ce qu'on obtienne une température de l'ordre de 40°C. L'opération complète dure de 3 à 6 heures. Enfin, on trouve l'ébavurage et le lavage du produit fini.

Ces différentes étapes du procédé connu correspondent à deux opérations principales: d'une part l'opération de calendrage qui correspond à l'élimination des bulles d'air et d'autre part l'opération d'autoclavage qui correspond au collage. L'opération de calendrage s'effectue généralement entre des rouleaux parallèles qui exercent leur pression suivant les génératrices définissant la surface du verre feuilleté préalablement constitué. Dans le cas des pare-brise d'automobiles, cette opération doit être guidée manuellement pièce par pièce. En outre, on comprend que la pression ne s'exerçant pas de façon continue et régulière, la qualité de l'adhérence des plaques de verre sur un film plastique ou plutôt sa pré-adhérence est irrégulière, insuffisante ou même nulle par endroits, même dans le cas de produits plats. Les tolérances de réalisation du produit verrier, à savoir les variations d'épaisseur ou de planéité pour les produits plats ou les variations d'épaisseur ou de rayon de courbure pour des produits tels que les pare-brise de véhicules automobiles entraînent ces variations d'adhérence. De plus, du fait de cette application de pression irrégulière, les poches d'air internes sont plus ou moins supprimées, des bulles subsistant d'autant mieux qu'après l'application locale et momentanée d'une pression linéaire, les produits verriers par leur élasticité propre reprennent leur forme initiale. On comprend également que, comme une pression locale est appliquée au produit verrier cela rend plus difficile

l'utilisation comme matériau constitutif du produit final de feuilles de verre minces, en raison des contraintes locales qui sont introduites.

Quant à l'opération d'autoclavage, qui se fait sous vide ou sous pression, elle a pour but d'améliorer l'adhérence et l'intimité des éléments constitutifs du verre feuilleté et la fusion contrôlée du film plastique. Toutefois, cette amélioration reste subordonnée aux tolérances précitées du produit verrier. De plus, on est limité quant à la dimension des verres feuilletés qu'on peut réaliser du fait que le produit doit être placé à l'intérieur d'un autoclave.

On comprend que ces opérations donnent souvent des résultats incertains et que de toute manière ils sont d'un coût élevé.

On connaît également un autre procédé de réalisation de verre feuilleté. Ce procédé qui fait l'objet du brevet américain 3.449.184 consiste à immerger un assemblage de feuilles de verre et de plastique dans un bain de matériau adhésif polymérisable, à appliquer éventuellement une faible surpression sur ledit assemblage, à retirer ensuite celui-ci du bain et à polymériser le matériau adhésif pour solidariser les feuilles de l'empilement. Cependant, ce procédé nécessite une durée relativement importante (48 à 60 heures), pour obtenir la polymérisation complète du matériau adhésif, même lorsqu'on utilise un catalyseur ou la chaleur pour accélérer cette polymérisation.

La présente invention a précisément pour objet un procédé de fabrication de produit feuilleté transparent, qui pallie les inconvénients des procédés précités, en permettant de garantir une qualité du produit fini conforme aux spécifications indiquées précédemment tout en ne mettant en oeuvre que des opérations relativement simples et d'un coût peu élevé, le nombre de ces opérations étant de plus réduit.

Selon une caractéristique essentielle de l'invention, la solidarisation de l'empilement final des feuilles est obtenue par collage des feuilles de verre et/ou de polycarbonate avec ou sans le ou les films plastiques, au moyen d'un matériau adhésif polymérisable qui polymérise sous une pression comprise entre 0,1 et 2 bars à une température inférieure à T au bout d'un temps compris entre 1 et 16 heures, de telle façon qu'il n'y ait pas fusion du film plastique. On peut enduire de matériau adhésif soit les feuilles constituant l'empilement, soit le ou les films plastiques lorsque ceux-ci existent.

Plus précisément la température T maximale est définie par la température à laquelle le matériau adhésif n'est plus stable. Compte tenu des compositions de matériau adhésif utilisées, T vaut environ 80°C (température de passage à l'état instable de l'amine tertiaire utilisée). Toutefois, comme on le montrera dans la suite de la description on obtient encore de très bons résultats en se plaçant dans une plage de température nettement inférieure comprise entre 10°C et 50°C.

Plus précisément, le procédé objet de l'invention pour réaliser un produit transparent feuilleté constitué par l'assemblage d'au moins deux feuilles en matériau laissant passer la lumière se caractérise en ce qu'on réalise un empilement desdites feuilles, après avoir enduit avec un matériau adhésif polymérisable la ou les faces desdites feuilles constituant les interfaces dans ledit empilement, en ce qu'on applique audit empilement une pression absolue inférieure ou égale à 2 bars en plaçant l'empilement à l'intérieur d'une poche étanche et souple et en appliquant à l'extérieur de ladite poche une surpression par rapport à la pression atmosphérique tout en maintenant une communication entre l'intérieur de ladite poche et le milieu ambiant afin de permettre l'évacuation de l'air contenu dans la poche et surtout l'évacuation des bulles d'air ou de gaz emprisonnées entre le ou les films plastiques et les plaques de verre, et en ce que simultanément on maintient une température T inférieure à la température limite de stabilité du matériau adhésif pendant un temps suffisant pour obtenir la prépolymérisation dudit matériau adhésif, et en ce qu'ensuite on maintient ledit empilement à une température inférieure ou égale à la température T pendant un temps inférieur à 16 heures.

Comme on l'a déjà indiqué, soit seulement certaines des feuilles sont rigides et on intercale entre elles des films plastiques souples qui constituent ainsi le complément des feuilles constituant l'empilement, soit la totalité des feuilles est rigide et on ne retrouve pas l'équivalent du ou des films plastiques.

Selon le procédé objet de l'invention, les différentes étapes du procédé de réalisation dans le cas du verre feuilleté consistent dans les opérations suivantes: lavage du film plastique, essorage du film plastique, pressage du film plastique pour le rendre lisse en surface, le calendrage se faisant à une température de 70° à 80°C, assemblage du verre et du film plastique par enduction d'un matériau adhésif sur les plaques de verre par des moyens classiques d'enduction de peinture et durcissement du matériau adhésif qui se réalise sous une pression de 0,1 à 2 bars à une température comprise entre 10 et 50°C pendant un temps d'une à seize heures.

Bien entendu, l'opération de calendrage n'est nécessaire que si l'on ne dispose que d'un film plastique non lisse. De plus, on peut améliorer la régularité de l'épaisseur du film plastique par sablage.

Un autre résultat important obtenu par la mise en oeuvre de procédé est que, bien que le film de butyral (lorsqu'il existe) ne soit pas transparent par lui-même, et que ce film de butyral ne fonde pas lors des étapes du procédé, on obtient néanmoins un produit transparent ayant sensiblement la même qualité optique qu'un verre poli.

Selon un mode préféré de mise en oeuvre du procédé de l'invention, la surpression est obtenue en immergeant ladite poche dans un volume de liquide jusqu'à une profondeur suffisante pour atteindre la pression hydrostatique souhaitée tout en permettant une libre évacuation de l'air de la poche. On

comprend que ce mode d'application de la pression permet effectivement d'obtenir pour un coût très faible l'application de cette surpression, que de plus, la pression appliquée à l'ensemble de la plaque est sensiblement identique en chaque point et qu'ainsi on n'introduit pas de contraintes localisées susceptibles de provoquer une rupture du verre favorisant ainsi l'utilisation de verres minces. En outre, ce mode d'application de la pression présente l'avantage que, lors de l'immersion progressive du sandwich de verre dans sa poche, la pression est appliquée progressivement à la plaque, ce qui favorise l'expulsion des bulles d'air emprisonnées dans le matériau adhésif entre le ou les films de plastique (s'ils existent) et les plaques de verre (ou de polycarbonate), ou bien entre les feuilles rigides (verre ou polycarbonate), ce matériau adhésif n'ayant pas encore atteint un stade de prépolymérisation.

Selon une autre caractéristique préférée du procédé objet de l'invention, le matériau adhésif utilisé comprend une résine époxydique de base et du méthacrylate d'amine tertiaire. Ce couple de produits a comme avantage principal de polymériser sous certaines proportions seul dans le temps, c'est-à-dire spontanément, sans nécessiter l'adjonction d'autres éléments tels que des catalyseurs.

Selon des variantes de réalisation du matériau adhésif, celui-ci peut comprendre également un monomère polyinsaturé pour augmenter la réactivité du matériau adhésif, c'est-à-dire pour diminuer le temps de durcissement, un monomère polaire pour augmenter l'adhérence du verre sur certains matériaux et des produits divers comme des péroxydes pour augmenter la réactivité ou des inhibiteurs de polymérisation pour augmenter le temps de conservation du matériau adhésif avant son emploi.

Enfin, dans le cas où le verre est d'épaisseur réduite, il peut être intéressant de soumettre le sandwich, lors de sa polymérisation, à un rayonnement ultraviolet.

La présente invention concerne également un matériau adhésif ou colle tel que défini ci-dessus, particulièrement adapté au collage des plaques de verre ou de polycarbonate sur le film plastique, ou le collage des plaques entre elles, mais qui peut avoir d'autres utilisations lorsque l'on veut coller du verre sur d'autres matériaux tels que du bois, du métal, du béton, du verre, etc.

L'invention concerne enfin le produit fini consistant en un produit feuilleté transparent caractérisé en ce qu'il est constitué par un empilement d'au moins deux feuilles en un matériau laissant passer la lumière, la ou les interfaces des feuilles étant constituées par une couche d'un matériau adhésif polymérisé.

Selon un mode de réalisation de l'invention, ce produit est constitué par *n* feuilles rigides, chaque feuille étant réalisée en un matériau choisi dans le groupe comprenant le verre et le polycarbonate, et par n-1 films plastiques souples intercalés entre lesdites feuilles rigides, les interfaces feuille rigide-film plastique étant constitués par le matériau adhésif polymérisé.

Bien entendu, ce produit peut être soit plan, soit bombé. De préférence le ou les films plastiques (lorsqu'ils existent) sont constitués par du polyvinyle de butyral. On peut également utiliser du PVC.

De toute façon, l'invention sera mieux comprises à la lecture de la description qui suit de plusieurs modes de réalisation de l'invention, donnés à titre d'exemples non limitatifs. La description se réfère aux figures annexées sur lesquelles on a représenté:

— sur la figure 1, une vue très générale montrant un dispositif simplifié pour appliquer la pression au verre feuilleté; et

— sur la figure 2, un premier mode de réalisation du dispositif ou de l'installation pour appliquer ladite pression.

On va tout d'abord décrire les différents types de matériau adhésif qui peuvent être utilisés selon qu'il est destiné effectivement à la réalisation de produit feuilleté transparent ou qu'il est plus généralement destiné au collage d'une plaque ou feuille de verre sur un autre matériau.

Comme on l'a déjà indiqué, selon l'invention, le matériau adhésif qui sera ultérieurement appelé colle est constitué par une résine de base de type époxydique (ester acrylique ou méthacrylique de résine époxydique) et par du méthacrylate d'amine tertiaire. Cette amine tertiaire est choisie dans le groupe comprenant le diéthyl amino-éthyl, le diméthyl amino-éthyl et le tertio-butyl amino-éthyl.

Selon l'invention, le matériau adhésif polymérisable a la composition pondérale suivante:

— 20 à 60% d'une résine de type époxydique,
— 40 à 80% de méthacrylate d'une amine tertiaire,
— 0 à 20% d'un monomère polaire,
— 0 à 15% d'un monomère polyinsaturé,
— 0 à 5% d'un peroxyde choisi dans le groupe constitué par le peroxyde de lauroyle, le peroxyde de benzoyle, le peroxyde de p.chlorobenzoyle,
— 0 à 1% d'un inhibiteur de polymérisation.

La résine de base du type époxy-acrylate est soit:

a) une résine Ebecryl 600 — UCB.

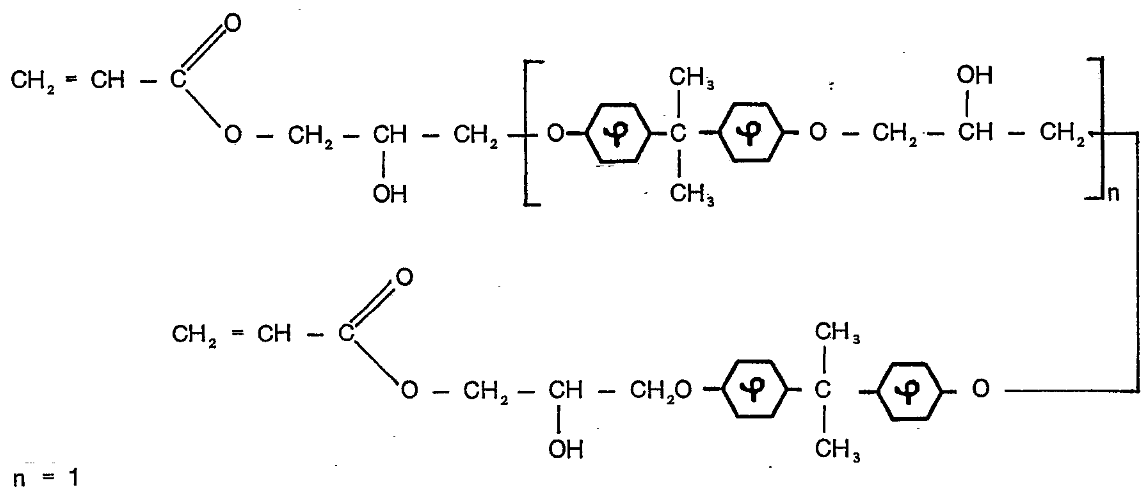

n = 1

b) une résine obtenue par addition de deux moles de diglycidyl éther du bisphénol A avec une mole de dimère de l'acide linoléique.
Après modification par l'acide acrylique, la résine est de la forme:

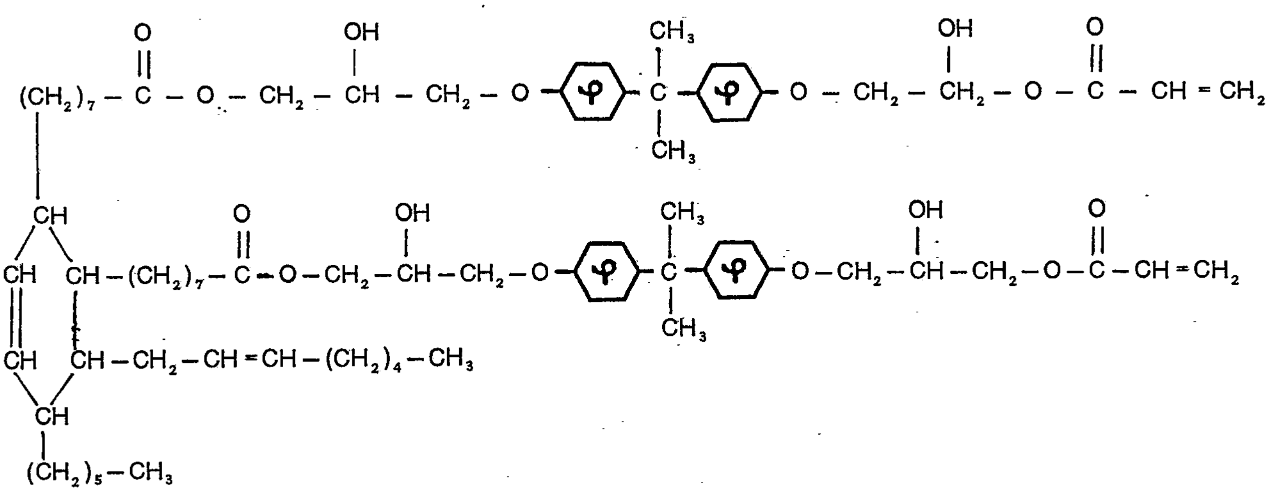

Cette résine époxydique insaturée a un indice de double liaison compris entre 0,03 et 0,30.

c) Ester acrylique de résine époxydique SHELL.

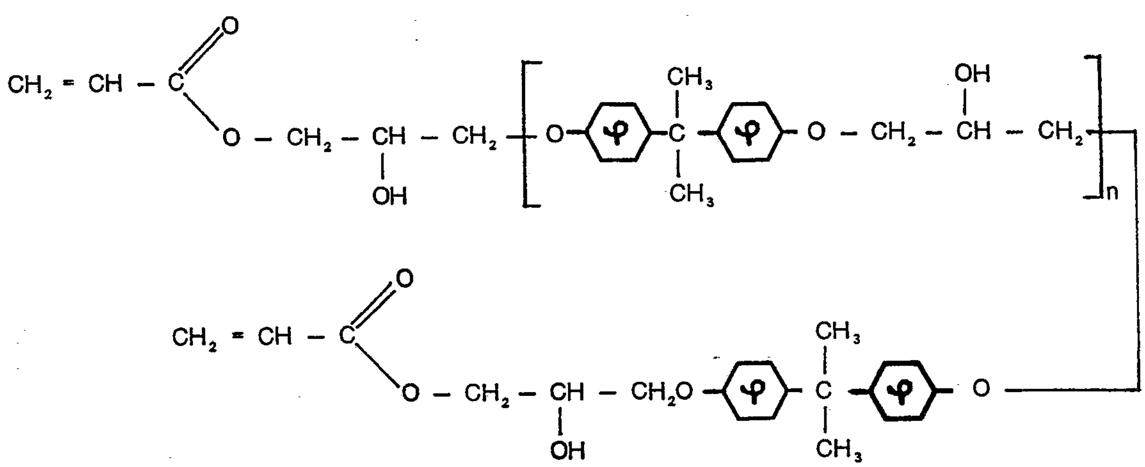

n = 0,2

Cette résine de base représente 20 à 60% de la colle.

Le méthacrylate de diméthyl d'amine tertiaire formant le couple réactif avec la ou les résines époxy-acryliques représente 40 à 80% de la colle.

Le monomère polaire est soit de l'acrylate d'éthylène glycol, soit du méthyacrylate d'éthylène glycol. Il peut représenter en poids de 0 à 20% de la colle.

Le monomère poly-insaturé est choisi dans le groupe comprenant: le diacrylate de diéthylène glycol, le diacrylate de tétra-éthylène glycol, le diacrylate de polyéthylène glycol, le diacrylate d'hexane diol, le tétra-acrylate de pentaérythrytol.

Il peut représenter de 0 à 15% en poids de la colle.

Le peroxyde est choisi dans le groupe comprenant: le peroxyde de lauroyle, le peroxyde de benzoyle, le peroxyde de p.chlorobenzoyle.

L'inhibiteur de polymérisation est soit de l'hydroquinone, soit l'ether monométhylique de l'hydroquinone. Il peut représenter de 0 à 1% en poids de la colle.

On va maintenant décrire un certain nombre d'exemples de mise en oeuvre du procédé et d'application de la colle en s'attachant dans un premier temps essentiellement à l'aspect chimique.

Exemple 1

Fabrication d'un produit feuilleté transparent constitué par deux plaques de verre et un film plastique en polyvinyle butyral.

Le film a été préformé par calendrage à 80°C entre deux feuilles de polyester qui n'adhèrent pas au film plastique. On utilise une colle ayant la composition suivante: 50% d'une résine époxydique saturée commerciale modifiée par l'acide acrylique, 49,8% de métacrylate de diméthyle amino-éthyle et 0,2% d'hydroquinone.

Après enduction par des moyens classiques d'une couche de colle d'une épaisseur d'environ 15 microns et assemblage du sandwich, celui-ci est placé dans une poche souple qui est immergée comme on l'a indiqué précédemment en la maintenant à une température ambiante de l'ordre de 20°C pendant en temps suffisant pour atteindre un stade de prépolymérisation ou prégélification de la colle. Dans l'exemple, ce temps est de l'ordre d'une heure. Ensuite la poche est sortie et le sandwich extrait de la poche est laissé pendant un certain temps à la température ambiante. Au bout d'un temps total de l'ordre de 16 heures, la colle est complètement polymérisée et assure parfaitement l'adhérence verre-film plastique. On essai de martelage montre que le verre cassé reste parfaitement collé au film plastique. La tenue aux intempéries est bonne. Après plusieurs semaines d'exposition à la lumière colaire, il n'y a pas jaunissement du verre feuilleté ainsi réalisé.

On comprend que l'immersion dans la poche déformable a un double rôle: d'une part, elle permet d'appliquer au sandwich la pression qui est nécessaire pour permettre le maintien en contact du film de plastique avec les plaques de verre jusqu'a ce qu'un début de polymérisation de la colle (pré-polymérisation) ait eu lieu. Après qu'on ait atteint ce stade de pré-polymérisation, il n'est plus nécessaire d'appliquer cette pression. Le deuxième rôle de cette application de la pression est de chasser les bulles d'air qui sont quasiment obligatoirement emprisonnées entre le film plastique et les plaques de verre et donc dans la colle au moment de la mise en place des différents éléments.

L'application de la pression étant exercée tout à fait au début de la polymérisation (avant la prépolymérisation), la colle a une fluidité suffisante pour permettre l'évacuation des bulles par application de cette pression réduite. Enfin, on comprend que le mode d'application de la pression permet d'assurer une pression parfaitement uniforme en tous points des plaques de verre. Bien entendu, l'intérieur de la poche immergée est raccordé, comme on l'a déjà dit, à l'air ambiant pour permettre l'évacuation de l'air de cette poche au fur et à mesure de l'application de la pression.

Exemple 2

On a refait le même essai que dans l'exemple 1, mais en partant d'un sandwich verre — polycarbonate, le film plastique étant en polyvinyl butyral. Le polycarbonate est du type TUFFAK produit par Rohm et Haas.

On utilise la même composition de matériau adhésif.

Tout se passe comme dans le cas de l'exemple 1 et le remplacement du verre par le polycarbonate n'altère ni les propriétés optiques ni les propriétés mécaniques du produit feuilleté finalement obtenu.

Exemple 3

Fabrication d'un verre feuilleté, le film plastique étant en polyvinyl butyral.

Le film a été préformé par calendrage comme indiqué ci-dessus. La colle est constituée par 45% d'une résine époxydique saturée commerciale modifiée par l'acide acrylique et 55% de métacrylate de diméthyl amino-éthyl.

Après enduction et assemblage, le sandwich est traité par les moyens décrits ci-dessus sous une surpression de 0,5 bar à 40°C. Au bout de trois heures, la colle est complétement polymérisée et assure parfaitement l'adhérence verre-film plastique. Des essais de martelage montrent que le verre cassé reste parfaitement collé au film plastique. La tenue aux intempéries est bonne et on n'observe

pas de phénomène de jaunissement après exposition à la lumière solaire.

Exemple 4

On réalise le même essai que dans l'exemple 3 mais en remplaçant une des plaques de verre par une plaque de polycarbonate. La composition de la colle est conservée, les conditions opératoires sont les mêmes.

Le produit obtenu présente les mêmes caractéristiques que dans l'exemple 3.

Exemple 5

Cet exemple est identique à l'exemple 2, si ce n'est que la composition de la colle est la suivante:

— 50% d'une résine époxy-acrylate commerciale de type Ebecryl 600,

— 50% deméthacrylate de diméthyl amino-éthyl.

On obtient la même qualité de produit feuilleté.

Exemple 6

Cet exemple est identique à l'exemple 5, mais on remplace le film plastique en butyral par un film plastique en PVC. Celui-ci est déjà calendré à la livraison.

Le produit feuilleté obtenu présente les mêmes qualités mécaniques et optiques.

Exemple 7

Fabrication d'un verre feuilleté, le film plastique étant en polyvinyl butyral.

Le film est préformé par calendrage comme indiqué ci-dessus. La colle a la composition suivante:

— 10% d'une résine époxydique saturée commerciale modifiée par l'acide méthacrylique;

— 40% d'une résine époxy-acrylate commerciale du type Ebecryl 600;

— 49% de méthacrylate de diméthyl amino-éthyl et,

— 1% de péroxyde de lauroyle.

Après enduction et assemblage, le sandwich est placé dans une poche souple et immergé comme on l'a indiqué précédemment, la poche étant maintenue à la température ambiante, c'est-à-dire à une température de l'ordre de 20°C. Après application de la pression jusqu'au stade de pré-polymérisation, on cesse d'appliquer la surpression et le verre feuilleté est maintenu à la température ambiante. Au bout de seize heures, la colle est complètement polymérisée et les tests sont également très favorables.

Exemple 8

Fabrication d'un verre feuilleté, le film plastique étant du PVC.

Après formage du film plastique, on utilise la colle ayant la composition suivante:

— 5% d'une résine époxydique saturée commerciale modifiée par l'acide acrylique;

— 40% d'une résine époxy-acrylate commerciale du type Ebecryl 860;

— 10% de diacrylate de polyéthylène glycol, et

— 45% de métacrylate de diméthyl amino-éthyl.

Au bout de seize heures de polymérisation, dans les conditions des exemples précédents, la colle est complètement polymérisée et assure parfaitement l'adhérence du film plastique sur les plaques de verre.

Exemple 9

Il est identique à l'exemple 4 mais la composition de la colle est modifiée. Cette composition est la suivante:

— 45% d'une résine époxydique saturée commerciale modifiée par l'acide acrylique, et

— 55% deméthacrylate de tertio-butyl amino-éthyl.

On obtient encore un produit feuilleté comportant un film plastique mince qui présente les mêmes qualités que dans les exemples précédents.

Exemple 10

Réalisation du collage de deux plaques de verre entre elles sans adjonction du film plastique.

La colle a la composition suivante:

— 45% d'une résine époxydique saturée commerciale modifiée par l'acide méthacrylique,

— 45% de méthacrylate de diméthyl amino-éthyl, et

— 10% d'acrylate d'éthylène glycol.

On enduit une des faces de chacune des plaques avec cette colle, puis on assemble les deux plaques l'une avec l'autre. On effectue ensuite les opérations déjà décrites. On constate que la résine est complètement polymérisée au bout de seize heures et assure parfaitement l'adhérence verre-verre.

Exemple 11

Dans cet exemple on colle directement par le procédé objet de l'invention, une feuille rigide épaisse de verre sur une feuille rigide épaisse de polycarbonate sans interposition de film plastique

mince. De plus, on utilise une colle ayant la composition suivante:

— 50% d'une résine époxy-acrylate commerciale du type Ebecryl 600;

— 50% deméthacrylate de diethyl amino-éthyl.

On obtient ainsi un produit qui présente par rapport à un verre simple les avantages suivants: Cela évite la condensation sur la paroi du produit feuilleté, on évite les phénomènes de reflets; on accroît sensiblement la résistance à l'éclatement. Bien entendu lorsqu'il y a en plus un film plastique ces propriétés sont conservées.

Il faut ajouter que l'utilisation dans la colle du méthacrylate de diéthyl amino-éthyl n'est pas liée au fait qu'on colle directement le verre sur le polycarbonate. Cette composition de colle aurait pu être utilisée dans les exemples précédents.

En se référant aux figures annexées, on va maintenant décrire plus en détail un mode de mise en oeuvre du procédé objet de l'invention.

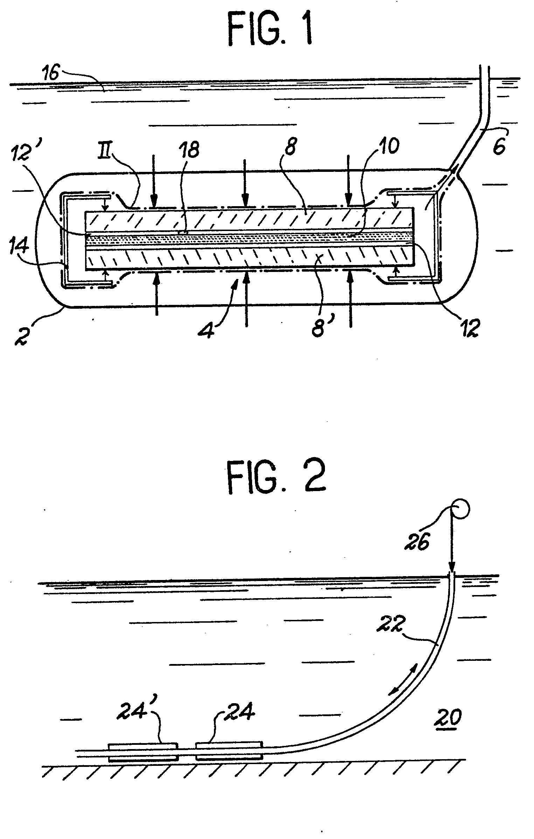

Sur la figure 1, on a représenté de façon simplifiée une poche permettant d'appliquer de façon uniforme cette pression. La poche 2 est constituée par exemple par une matière plastique souple et comporte bien sûr une ouverture non représentée pour permettre l'introduction du sandwich devant constituer le verre feuilleté et portant la référence générale 4. Cette poche comporte également des moyens pour obturer cette ouverture. La poche est munie également d'un conduit permettant l'évacuation de l'air au fur et à mesure de l'application de la pression. Le sandwich 4 est constitué comme on l'a déjà indiqué par deux plaques de verre 8 et 8′ entre lesquelles est disposé un film plastique 10 par exemple en polyvinyl butyral. On a représenté également sur cette figure en en exagérant volontairement l'épaisseur les deux couches de matériau adhésif 12 et 12′. Afin de maintenir les positions relatives des deux plaques de verre avant que la résine d'enduction n'assure la solidarisation des deux plaques de verre, on peut utiliser un châssis externe 14 qui a simplement pour but d'éviter les déplacements relatifs des deux plaques de verre. On comprend qu'en immergeant dans une piscine symbolisée par le trait 16, la poche contenant le sandwich 14 à une profondeur adéquate, on applique effectivement aux plaques de verre une pression régulière dont la valeur est déterminée par la profondeur de l'immersion. Au fur et à mesure de l'application de cette immersion, la poche 2 qui est souple se déforme comme on l'a représenté en pointillés (II) provoquant ainsi le dégazage de l'air qu'elle contient. Comme cette poche est parfaitement déformable, la pression est directement transmise aux faces externes des plaques de verre ou de polycarbonate. Cela permet donc par application de cette pression d'évacuer les bulles d'air ou de gaz telles que 18 qui pourraient être emprisonnées dans la colle.

Bien entendu, rien ne serait modifié si le produit feuilleté était constitué uniquement par une feuille de verre et une feuille de polycarbonate.

Sur la figure 2, on a représenté en élévation un mode simplifié de réalisation de l'installation d'immersion permettant d'appliquer la pression jusqu'à ce qu'on obtienne la prépolymérisation. Dans ce mode de réalisation, on trouve une piscine 20 comportant des rails de guidage 22 et des ensembles 24 comportant d'une part la poche 2 et d'autre part des moyens de coopération avec les rails de guidage 22. On a symbolisé par le treuil 26 des moyens pour provoquer la montée et la descente des structures à poche 24 et 24′. On comprend qu'un des avantages de cette disposition réside dans le fait que la pression hydrostatique appliquée au sandwich devant constituer le verre feuilleté croît progressivement au fur et à mesure de l'enfoncement et il existe, lors de cette phase d'enfoncement, une différence de pression entre la partie supérieure du sandwich et la partie inférieure, ce qui favorise l'évacuation des bulles 18 incluses dans les couches de colle 12 et 12′.

Dans la description précédente de l'installation de fabrication de produit feuilleté transparent, on n'a décrit en détail que la partie concernant l'application de la pression. Une installation complète comprendrait bien sûr également un poste d'enduction en colle des plaques de verre et un poste de manipulation de ces plaques et de mise en place du film de plastique. Ces postes sont de type connu et il n'est donc pas nécessaire de les décrire.

De même, lorsqu'on utilise un châssis intérieur 14 avant l'introduction du sandwich dans la poche, il faut prévoir en plus, un poste de mise en place du châssis et un poste d'enlèvement du châssis en vue du stockage des verres feuilletés à la température convenable jusqu'au durcissement complet de la colle. Bien sûr, un même châssis peut enserrer plusieurs sandwichs disposés les uns à côté des autres.

Il découle de l'ensemble de la description précédente que par ces différentes étapes et par les différents moyens prévus pour sa mise en oeuvre, le procédé objet de l'invention répond parfaitement aux impératifs de fabrication de produit feuilleté transparent en grande série et à un coût aussi bas que possible. Cela résulte en particulier du fait que toutes les étapes du procédé se déroulent à la température ambiante ou à des températures voisines de la température ambiante, ce qui résout tous les problèmes d'isolation thermique de l'installation et que toutes ces mêmes opérations se déroulent à des surpressions au maximum égal à un bar, ce qui fait qu'il ne se pose pratiquement pas de problème de mise en pression puisque selon l'invention, cette surpression réduite peut être obtenue avec un coût réduit par immersion momentanée dans une piscine.

Toute la description faite en liaison avec les figures 1 et 2, se rapportait au cas où le sandwich est un bifeuilleté, bien entendu, cette description s'applique intégralement au cas d'un feuilleté à *n* plaques de verre.

Le procédé permet également de coller sur une ou sur les deux faces externes du sandwich une feuille de plastique transparente. Cela peut être particulièrement intéressant dans le cas de la réalisation de pare-brise.

## Revendications

1. Procédé de réalisation d'un produit transparent feuilleté, constitué par l'assemblage d'au moins deux feuilles en matériau laissant passer la lumière, caractérisé en ce qu'on réalise un empilement desdites feuilles, après avoir enduit avec un matériau adhésif polymérisable, la ou les faces desdites feuilles constituant des interfaces dans ledit empilement, en ce qu'on applique audit empilement une pression absolue inférieure ou égale à 2 bars en plaçant ledit empilement à l'intérieur d'une poche souple et étanche, et en appliquant à l'extérieur de ladite poche une surpression par rapport à la pression atmosphérique tout en maintenant une communication entre l'intérieur de ladite poche et le milieu ambiant, en ce que, simultanément, on maintient une température T inférieure à la température limite de stabilité du matériau adhésif pendant un temps suffisant pour obtenir la prépolymérisation dudit matériau adhésif, et en ce qu'ensuite on maintient ledit empilement à une température inférieure ou égale à la température T pendant un temps inférieur à 16 heures.

2. Procédé selon la revendication 1, caractérisé en ce que l'empilement consiste en au moins deux feuilles rigides, chaque feuille étant réalisée en un matériau choisi dans le groupe comprenant le verre et le polycarbonate.

3. Procédé selon la revendication 1, caractérisé en ce que l'empilement consiste en un sandwich réalisé en disposant alternativement une feuille de matériau rigide apte à laisser passer la lumière et un film plastique souple, en ce que chaque feuille rigide est réalisée en un matériau choisi dans le groupe comprenant le verre et le polycarbonate.

4. Procédé selon l'un quelconque des revendications 1 à 3, caractérisé en ce que ladite surpression est obtenue en immergeant progressivement ladite poche sous une hauteur de liquide correspondant à ladite surpression, l'intérieur de ladite poche étant relié à l'air ambiant.

5. Procédé selon l'une quelconque des revendications 1 à 4, caractérisé en ce qu'on utilise un matériau adhésif polymérisable ayant la composition pondérale suivante:

— 20 à 60% d'une résine de type époxydique,
— 40 à 80% de méthacrylate d'une amine tertiaire,
— 0 à 20% d'un monomère polaire,
— 0 à 15% d'un monomère polyinsaturé,
— 0 à 5% d'un peroxyde choisi dans le groupe constitué par le peroxyde de lauroyle, le peroxyde de benzoyle, le peroxyde de p.chlorobenzoyle,
— 0 à 1% d'un inhibiteur de polymérisation.

6. Procédé selon la revendication 5, caractérisé en ce que l'amine tertiaire est choisie dans le groupe comprenant : le diéthyl amino-éthyl, le diméthyl amino-éthyl et le tertiobutyl amino-éthyl.

7. Procédé selon la revendication 6, caractérisé en ce que la résine du matériau adhésif est choisie dans le groupe comprenant les résines époxy-acrylate et époxyméthacrylate.

8. Procédé selon l'une quelconque des revendications 5 à 7, caractérisé en ce que le monomère polyinsaturé dudit matériau adhésif est choisi dans le groupe constitué par le diacrylate de diéthylène glycol, le diacrylate de tétraéthylène glycol, le diacrylate de polyéthylène glycol, le diacrylate d'hexane diol, le tétra-acrylate de pentaérythrytol.

9. Matériau adhésif pour coller à une température T inférieure à la température limite de stabilité dudit matériau et à une pression inférieure à 2 bars, deux pièces dont l'une au moins est en verre, caractérisé en ce qu'il comprend au moins une résine du type époxydique représentant de 20 à 60% en poids dudit matériau et du méthacrylate d'une amine tertiaire représentant 40 à 80% en poids dudit matériau.

10. Matériau adhésif selon la revendication 9, caractérisé en ce que l'amine tertiaire est choisie dans le groupe comprenant le diéthyl amino-éthyl, le diméthyl amino-éthyl et le tertiobutyl amino-éthyl.

11. Matériau adhésif selon la revendication 10, caractérisé en ce que la résine époxydique est choisie dans le groupe comprenant les résines époxy-acrylate et les résines époxyméthacrylate.

12. Matériau adhésif selon l'une quelconque des revendications 9 à 11, caractérisé en ce qu'il comprend un monomère polaire apte à améliorer l'adhérence dudit matériau choisi dans le groupe comprenant l'acrylate d'éthylène glycol et le méthacrylate d'éthylène glycol, et présentant de 0 à 20% en poids dudit matériau.

13. Matériau adhésif selon l'une quelconque des revendications 9 à 12, caractérisé en ce qu'il comprend de 0 à 15% en poids d'un monomère polyinsaturé choisi dans le groupe constitué par le diacrylate de diéthylène glycol, le diacrylate de tétraéthylène glycol, le diacrylate de polyéthylène glycol, le diacrylate d'hexane diol, le tétra-acrylate de pentaérythrytol.

14. Matériau adhésif selon l'une quelconque des revendications 9 à 13, caractérisé en ce qu'il comprend de 0 à 5% en poids d'un peroxyde choisi dans le groupe constitué par le peroxyde de lauroyle, le peroxyde de benzoyle, le peroxyde de p.chloro-benzoyle.

15. Matériau adhésif selon l'une quelconque des revendications 9 à 14, caractérisé en ce qu'il

comprend de 0 à 1% en poids d'un inhibiteur de polymérisation choisi dans le groupe comprenant l'éther monoéthylique de l'hydroquinone et l'hydroquinone.

16. Produit transparent feuilleté caractérisé en ce qu'il est constitué par un empilement d'au moins deux feuilles en un matériau laissant passer la lumière, la ou les interfaces des feuilles étant constitués par une couche d'un matériau adhésif polymérisé selon l'une quelconque des revendications 9 à 15.

17. Produit transparent feuilleté selon la revendication 16, caractérisé en ce qu'il est constitué par une feuille de verre et une feuille de polycarbonate séparée par une couche dudit matériau adhésif polymérisé.

18. Produit transparent feuilleté selon la revendication 16, caractérisé en ce qu'il est constitué par *n* feuilles rigides, chaque feuille étant réalisée en un matériau choisi dans le groupe comprenant le verre et le polycarbonate, et par n-1 films plastiques souples intercalés entre lesdites feuilles rigides, les interfaces feuille rigide-film plastique étant constitués par le matériau adhésif polymérisé.

19. Produit transparent feuilleté selon la revendication 18, caractérisé en ce que le ou lesdits films plastiques sont en polyvinyl butyral.

20. Produit transparent feuilleté selon la revendication 18, caractérisé en ce que le ou lesdits films plastiques sont en PVC.

21. Produit transparent feuilleté selon l'une quelconque des revendications 16 à 20, caractérisé en ce que lesdites feuilles sont planes.

22. Produit transparent feuilleté selon l'une quelconque des revendications 16 à 20, caractérisé en ce que lesdites feuilles sont bombées.

## Claims

1. A method of fabrication of a transparent laminated product constituted by the assembly of at least two sheets of material through which light is permitted to pass, characterized in that said method consists in forming a stack of said sheets, after having coated the face or faces of said sheets which constitute interfaces within said stack, with a polymerizable adhesive substance, in applying to said stack an absolute pressure below or equal to 2 bar by placing said stack within a flexible leak-tight bag and applying to the exterior of said bag an overpressure with respect to the atmospheric pressure while maintaining a communication between the interior of said bag and the surrounding medium, in maintaining at the same time a temperature T below the maximum temperature of stability of the adhesive substance during a sufficient period of time to obtain prepolymerization of said adhesive substance, and in then maintaining said stack at a temperature below or equal to the temperature T during a period of time which is less than sixteen hours.

2. A method according to claim 1, characterized in that the stack consists of at least two rigid sheets, each sheet being formed of material selected from the group comprising glass and polycarbonate.

3. A method according to claim 1, characterized in that the stack consists of a sandwich formed by arranging in alternate sequence a sheet of rigid material through which light is permitted to pass and a flexible plastic film, and each rigid sheet is formed of material selected from the group comprising glass and polycarbonate.

4. A method according to anyone of claims 1 to 3, characterized in that said overpressure is obtained by progressively immersing said bag to a depth of liquid corresponding to said overpressure, the interior of said bag being connected to the surrounding air.

5. A method according to anyone of claims 1 to 4, characterized in that use is made of a polymerizable adhesive substance having the following composition by weight:

— 20 to 60% of a resin of the epoxy type,
— 40 to 80% of methacrylate of a tertiary amine,
— 0 to 20% of a polar monomer,
— 0 to 15% of a polyunsaturated monomer,
— 0 to 5% of a peroxide selected from the group constituted by lauroyl peroxide, benzoyl peroxide, p-chlorobenzoyl peroxide,
— 0 to 1% of a polymerization inhibitor.

6. A method according to claim 5, characterized in that the tertiary amine is selected from the group comprising diethylaminoethyl, dimethylaminoethyl and *tert*-butylaminoethyl.

7. A method according to claim 6, characterized in that the resin of the adhesive substance is selected from the group comprising the epoxyacrylate and epoxymethacrylate resins.

8. A method according to anyone of claims 5 to 7, characterized in that the polyunsaturated monomer of said adhesive substance is selected from the group constituted by diethylene glycol diacrylate, tetraethylene glycol diacrylate, polyethylene glycol diacrylate, hexanediol diacrylate, pentaerythrytol tetra-acrylate.

9. An adhesive substance for bonding together two parts at a temperature T below the maximum temperature of stability of said adhesive substance and at a pressure below 2 bar in which at least one of said part is of glass, characterized in that said substance comprises at least one resin of the epoxy

type representing between 20 and 60% by weight of said substance and a tertiary amine methacrylate representing 40 to 80% by weight of said substance.

10. A adhesive substance according to claim 9, characterized in that the tertiary amine is selected from the group comprising diethylaminoethyl, dimethylaminoethyl and *tert*-butylaminoethyl.

11. An adhesive substance according to claim 10, characterized in that the epoxy resin is selected from the group comprising the epoxyacrylate resins and the epoxymethacrylate resins.

12. An adhesive substance according to anyone of claims 9 to 11, characterized in that said substance comprises a polar monomer which is capable of improving the adhesion of said substance, said monomer being selected from the group comprising ethylene glycol acrylate and ethylene glycol methacrylate, and representing from 0 to 20% by weight of said substance.

13. An adhesive substance according to anyone of claims 9 to 12, characterized in that said substance comprises 0 to 15% by weight of a polyunsaturated monomer selected from the group constituted by diethylene glycol diacrylate, tetraethylene glycol diacrylate, polyethylène glycol diacrylate, hexanediol diacrylate, pentaerythrytol tetraacrylate.

14. An adhesive substance according to anyone of claim 9 to 13, characterized in that said substance comprises 0 to 5% by weight of a peroxide selected from the group constituted by lauroyl peroxide, benzoyl peroxide, *p*-chlorobenzoyl peroxide.

15. An adhesive substance according to anyone of claims 9 to 14, characterized in that said substance comprises 0 to 1% by weight of a polymerization inhibitor selected from the group comprising hydroquinone monoethylether and hydroquinone.

16. A transparent laminated product, characterized in that said product is constituted by a stack of at least two sheets of material through which light is permitted to pass, the interface or interfaces of the sheets being constituted by a layer of a polymerized adhesive substance according to anyone of claims 9 to 15.

17. A transparent laminated product according to to claim 16, characterized in that said product is constituted by a sheet of glass and a sheet of polycarbonate separated by a layer of said polymerized adhesive substance.

18. A transparent laminated product according to claim 16, characterized in that said product is constituted by *n* rigid sheets, each sheet being formed of material selected from the group comprising glass and polycarbonate, and by n-1 flexible plastic films intercalated between said rigid sheets, the interfaces between rigid sheet and plastic film being constituted by the polymerized adhesive substance.

19. A transparent laminated product according to claim 18, characterized in that said plastic film or films are of polyvinyl butyral.

20. A transparent laiminated product according to claim 18, characterized in that said plastic film or films are of PVC.

21. A transparent laminated product according to anyone of claims 16 to 20, characterized in that said sheets are flat.

22. A transparent laminated product according to anyone of claims 16 to 20, characterized in that said sheets are convex.

**Patentansprüche**

1. Verfahren zur Herstellung eines transparenten Schichtprodukts aus mindestens zwei Folien bzw. Lagen aus einem lichtdurchlässigen Material, dadurch gekennzeichnet, daß man Folien bzw. Lagen nach dem Überziehen mit einem polymerisierbaren Klestoffmaterial so aufeinanderlegt, daß die Oberfläche(n) der Folien bzw. Lagen in dem Stapel Grenzflächen darstellen, daß man auf den Stapel einen absoluten Druck von 2 bar oder weniger einwirken läßt, indem man den Stapel in das Innere eines weichen und dichten Beutels einbringt und auf das Äußere des Beutels einen Überdruck, bezogen auf Atmosphärendruck, einwirken läßt, unter Aufrechterhaltung einer Verbindung zwischen dem Innenraum des Beutels und dem umgebenden Milieu, daß man gleichzeitig eine Temperatur T unterhalb der Grenztemperatur der Stabilität des Klebstoffmaterials für einen Zeitraum aufrechterhält, der für die Prepolymerisation des Klebstoffmaterials ausreicht, und daß man anschließend den Stapel für einen Zeitraum von weniger als 16 Stunden bei einer Temperatur hält, die gleich der Temperature T ist oder darunter liegt.

2. Verfahren nach Anspruch 1, dadurch gekennzeichnet, daß der Stapel aus mindestens zwei starren Folien bzw. Lagen besteht, wobei jede Folie bzw. Lage aus einem Material besteht, das ausgewählt wird aus der Gruppe Glas und Polycarbonat.

3. Verfahren nach Anspruch 1, dadurch gekennzeichnet, daß der Stapel aus einem Sandwich besteht, in dem abwechselnd eine Folie bzw. Lage aus einem lichtdurchlässigen starren Material und ein weicher Kunststoffilm übereinander liegen, und daß jede starre Folie bzw. lage aus einem Material besteht, das ausgewählt wird aus der Gruppe Glas und Polycarbonat.

4. Verfahren nach einem der Ansprüche 1 bis 3, dadurch gekennzeichnet, daß der Überdruck erzeugt wird, indem man den Beutel allmählich bis zu einer solchen Tiefe in eine Flüssigkeit eintaucht,

die dem Überdruck entspricht, wobei der Innenraum des Beutels mit der umgebenden Luft in Verbindung steht.

5. Verfahren nach einem der Ansprüche 1 bis 4, dadurch gekennzeichnet, daß man ein polymerisierbares Klebstoffmaterial mit der folgenden Gewichtszusammensetzung verwendet:

— 20 bis 60% Harz vom Epoxid-Typ,
— 40 bis 80% Methacrylat eines tertiären Amins,
— 0 bis 20% polares Monomeres,
— 0 bis 15% mehrfach ungesättigtes Monomeres,
— 0 bis 5% Peroxid, ausgewählt aus der Gruppe Lauroylperoxid, Benzoylperoxid, p-Chlorbenzoylperoxid,
— 0 bis 1% Polymerisationsinhibitor.

6. Verfahren nach Anspruch 5, dadurch gekennzeichnet, daß das tertiäre Amin ausgewählt wird aus der Gruppe Diäthylaminoäthyl, Dimethylaminoäthyl und tert.-Butylaminoäthyl.

7. Verfahren nach Anspruch 6, dadurch gekennzeichnet, daß das Harz des Klebstoffmaterials ausgewählt wird aus der Gruppe der Epoxyacrylatharze und Epoxymethacrylatharze.

8. Verfahren nach einem der Ansprüche 5 bis 7, dadurch gekennzeichnet, daß das mehrfach ungesättigte Monomere des Klebstoffmaterials ausgewählt wird aus der Gruppe Diäthylenglykoldiacrylat, Tetraäthylenglykoldiacrylat, Polyäthylenglykoldiacrylat, Hexandioldiacrylat, Pentaerythrittetraacrylat.

9. Klebstoffmaterial zum Verkleben von zwei Stücken bzw. Teilen, von denen mindestens eines aus Glas ist, bei einer Temperatur T unterhalb der Grenztemperatur der Stabilität des Materials und bei einem Druck unterhalb 2 bar, dadurch gekennzeichnet, daß es enthält mindestens ein Harz vom Epoxid-Typ, das 20 bis 60 Gew.-% des Materials ausmacht, und ein tertiäres Aminmethacrylat, das 40 bis 80 Gew.-% des Materials ausmacht.

10. Klebstoffmaterial nach Anspruch 9, dadurch gekennzeichnet, daß das tertiäre Amin ausgewählt wird aus der Gruppe Diäthylaminoäthyl, Dimethylaminoäthyl und tert.-Butylaminoäthyl.

11. Klebstoffmaterial nach Anspruch 10, dadurch gekennzeichnet, daß das Epoxidharz ausgewählt wird aus der Gruppe der Epoxyacrylatharze und der Epoxymethacrylatharze.

12. Klebstoffmaterial nach einem der Ansprüche 9 bis 11, dadurch gekennzeichnet, daß es enthält ein polares Monomeres zur Verbesserung der Haftung des Materials, das ausgewählt wird aus der Gruppe Äthylenglykolacrylat und Äthylenglykolmethacrylat und das 0 bis 20 Gew.-% des Materials ausmacht.

13. Klebstoffmaterial nach einem der Ansprüche 9 bis 12, dadurch gekennzeichnet, daß es enthält 0 bis 15 Gew.-% eines mehrfach ungesättigten Monomeren, das ausgewählt wird aus der Gruppe Diäthylenglykoldiacrylat, Tetraäthylenglykoldiacrylat, Polyäthylenglykoldiacrylat, Hexandioldiacrylat, Pentaerythrittetraacrylat.

14. Klebstoffmaterial nach einem der Ansprüche 9 bis 13, dadurch gekennzeichnet, daß es enthält 0 bis 5 Gew.-% eines Peroxids, das ausgewählt wird aus der Gruppe Lauroylperoxid, Benzoylperoxid, p-Chlorbenzoylperoxid.

15. Klebstoffmaterial nach einem der Ansprüche 9 bis 14, dadurch gekennzeichnet, daß es enthält 0 bis 1 Gew.-% eines Polymerisationsinhibitors, der ausgewählt wird aus der Gruppe Hydrochinonmonäthyläther und Hydrochinon.

16. Transparentes Schichtprodukt, dadurch gekennzeichnet, daß es besteht aus einem Stapel von mindestens 2 Folien bzw. Lagen aus einem lichtdurchlässigen Material, wobei die Grenzfläche(n) der Folien bzw. Lagen aus einer Schicht aus einem polymerisierten Klebstoffmaterial nach einem der Ansprüche 9 bis 15 besteht(bestehen).

17. Transparentes Schichtprodukt nach Anspruch 16, dadurch gekennzeichnet, daß es besteht aus einer Folie (Lage) aus Glas und einer Folie (Lage) aus Polycarbonat, die durch eine Schicht aus dem polymerisierten Klebstoffmaterial voneinander getrennt sind.

18. Transparentes Schichtprodukt nach Anspruch 16, dadurch gekennzeichnet, daß es besteht aus n starren Folien (Lagen), wobei jede Folie (Lage) aus einem Material besteht, das ausgewählt wird aus der Gruppe Glas und Polycarbonat, und aus n-1 weichen Kunststoffilmen, die zwischen den starren Folien (Lagen) angeordnet sind, wobei die Grenzflächen zwischen den starren Folien (Lagen) und den Kunststoffilmen aus einem polymerisierten Klebstoffmaterial bestehen.

19. Transparentes Schichtprodukt nach Anspruch 18, dadurch gekennzeichnet, daß der oder die Kunststoffilme aus Polyvinylbutyral besteht bzw. bestehen.

20. Transparentes Schichtprodukt nach Anspruch 18, dadurch gekennzeichnet, daß der oder die Kunststoffilme aus PVC besteht bzw. bestehen.

21. Transparentes Schichtprodukt nach einem der Ansprüche 16 bis 20, dadurch gekennzeichnet, daß die Folien (Lagen) eben sind.

22. Transparentes Schichtprodukt nach einem der Ansprüche 16 bis 20, dadurch gekennzeichnet, daß die Folien (Lagen) gewölbt sind.

FIG. 1

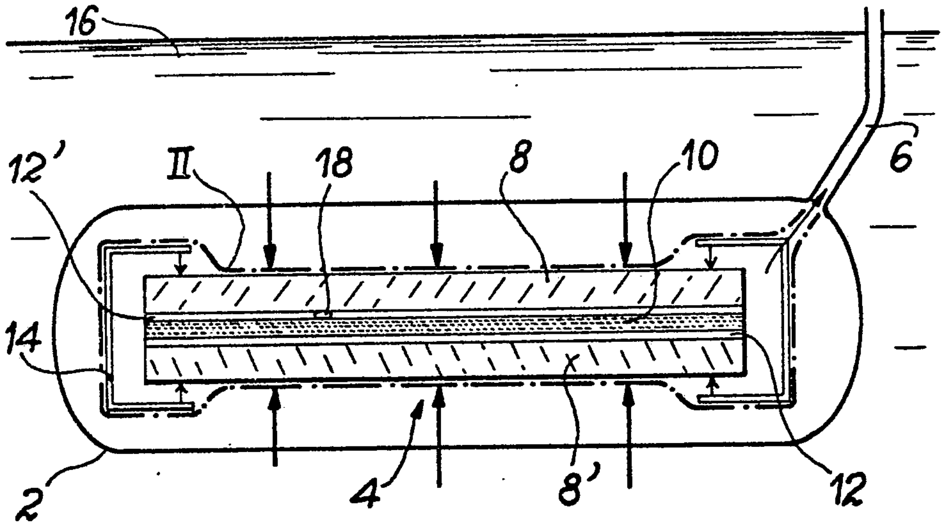


FIG. 2